# EUROPÄISCHE PATENTSCHRIFT

(11) **EP 2 108 912 B1**
(45) Veröffentlichungstag und Bekanntmachung des Hinweises auf die Patenterteilung: **13.03.2013**
(21) Anmeldenummer: 09165333.7
(22) Anmeldetag: 29.07.2003
(51) Int. Cl.: F28F 9/00, F28D 1/053, F28F 9/02, F28F 9/04

(54) **Kondensator, insbesondere für eine Kraftfahrzeug-Klimaanlage**
Condenser, in particular for a vehicle cooling system
Condenseur, en particulier pour système de climatisation de véhicules

(30) Priorität: 08.08.2002 DE 10237037
(43) Veröffentlichungstag der Anmeldung: 14.10.2009
(62) Teilanmeldung aus: 03017173.0
(73) Patentinhaber: Behr GmbH & Co. KG, 70469 Stuttgart (DE); Frape Behr S.A., 08040 Barcelona (ES)
(72) Erfinder: Ruoff, Rainer, 71729 Erdmannhausen (DE); Gonzàlez Rechea, Pedro, 70193 Stuttgart (DE); Conejo, Miguel Angel Jiménez, 08020 Barcelona (ES)
(74) Vertreter: Grauel, Andreas

(56) Entgegenhaltungen:
- EP-A- 0 909 932
- EP-A- 0 974 793
- WO-A-01/88445
- DE-A- 4 009 780
- DE-A- 19 645 502
- US-A- 5 159 821
- PATENT ABSTRACTS OF JAPAN Bd. 1998, Nr. 10, 31. August 1998 (1998-08-31) & JP 10 132487 A (TOYO RADIATOR CO LTD), 22. Mai 1998 (1998-05-22)
- PATENT ABSTRACTS OF JAPAN Bd. 1997, Nr. 10, 31. Oktober 1997 (1997-10-31) & JP 09 156353 A (SUZUKI MOTOR CORP), 17. Juni 1997 (1997-06-17)

## Beschreibung

Die Erfindung betrifft einen Kondensator, insbesondere für eine Kraftfahrzeug-Klimaanlage, bestehend aus einem Rohr/Rippen-Block und beiderseits angeordneten Sammelrohren mit einem Kältemitteleinlass und einem Kältemittelauslass.

Der durch die DE-A 42 38 853 bekannt gewordene Kondensator weist einen Rohr/Rippen-Block auf, der aus Flachrohren und zwischen diesen angeordneten Wellrippen sowie aus Sammelrohren besteht, in welche die Enden der Flachrohre münden. Die Sammelrohren weisen einen etwa kreisförmigen Querschnitt auf und sind zweiteilig ausgebildet, d. h. sie bestehen aus einem etwa schalenförmigen Bodenteil, in welches die Flachrohre eingesetzt sind, und aus einem ebenfalls schalenförmigen Deckelteil, welches mit dem Bodenteil zu einem geschlossen Querschnitt verbunden ist. An der Sammelrohren sind Kältemittelanschlüsse, d. h. ein Kältemitteleinlass und ein Kältemittelauslass angeordnet, und zwar jeweils im Deckelteil des Sammelrohres. Die Kältemittelanschlüsse bzw. die Einlass- und Auslassstutzen stehen somit vom Kondensator ab und beanspruchen zusätzlichen Bauraum neben dem Kondensator, dessen Rohre waagerecht und dessen Sammelrohre senkrecht im Fahrzeug eingebaut sind. Ein Bauraum für die Kältemittelanschlüsse seitlich neben dem Kondensator steht in manchen Fällen nicht zur Verfügung, insbesondere, wenn die Kältemittelanschlüsse - wie aus der EP-A 0 915 308 bekannt - sich aufgrund weiterer Befestigungselemente relativ weit nach außen erstrecken und somit die Einbaubreite des Kondensators erheblich vergrößern.

Durch die DE-A 196 45 502 wurde ein Kondensator mit einem Trockner bekannt, der unterhalb des Kondensators angeordnet und an ihm befestigt ist. Der Kältemitteleinlass für diesen Kondensator ist am Deckelteil eines zweiteiligen Sammelrohres angeordnet, während der Kältemittelauslass an der unteren Stirnseite des gegenüber liegenden Sammelrohres angeordnet ist. Mit dieser Stirnseite ist ein Ende eines abgewinkelten Verbindungsrohres verbunden, während das andere Ende mit dem Trockner verbunden ist. Eine solche Anbindung eines Kältemittelanschlussrohres an das Sammelrohr kann jedoch löttechnische Probleme ergeben.

Die WO 01/88445 offenbart einen Wärmeübertrager, bei welchem ein Sammelkasten gegenüber dem Rohr-Rippen-Block stirnseitig verlängert ist und einen überstand aufweist, in dem ein Austrittsrohr mit einer Muffe eingesetzt ist, welches parallel zu den Rohren verläuft.

Es ist Aufgabe der vorliegenden Erfindung, für einen Kondensator der eingangs genannten Gattung einen Kältemittelanschluss darzustellen, der keinen zusätzlichen Bauraum in der Breite des Kondensators benötigt und der einfach zusammen mit den übrigen Teilen des Kondensators gelötet werden kann.

Diese Aufgabe wird durch die Merkmale von Patentanspruch 1 gelöst, wobei sich vorteilhafte Ausgestaltungen der Erfindung aus den Unteransprüchen 2 und 3 ergeben.

Dadurch, dass der Kältemittelanschluss am Bodentell des Sammelrohres angeordnet, d. h. zur Seite des Rohr/Rippen-Blockes gerichtet ist, wird kein zusätzlicher Bauraum in der Breite des Kondensators beansprucht. Es ergibt sich somit ein Einbauvorteil. Darüber hinaus ist die Lage des Kältemittelanschlusses geschützt, da sie nach außen durch das Sammelrohr abgedeckt ist. Eventuelle Beschädigungen durch Stöße beim Transport oder beim Einbau des Kondensators, wie sie häufig bei äußeren Anschlüssen auftreten, werden bei der erfindungsgemäßen Anordnung vermieden.

Das Sammelrohr ist über den Rohr/Rippen-Block hinaus verlängert und steht etwas über den Block hinaus, so dass in diesem Bereich des Sammelrohres im Bodenteil eine Bohrung zur Aufnahme eines Kältemittelaustrittsrohres angeordnet werden kann. Ein solches Kältemittelaustrittsrohr, welches gerade ausgebildet und etwa parallel zu den Flachrohren des Rohr/Rippen-Blockes angeordnet ist, lässt sich problemlos mit dem Sammelrohr und dem gesamten Rohr/Rippen-Block in einem Arbeitsgang löten. Durch die Verlängerung des Sammelrohres nach unten, d. h. über das unterste Rohr des Blockes hinaus ergibt sich ein zusätzliches Reservoir zur Aufnahme von flüssigem Kältemittel, so dass nur flüssiges Kältemittel in das Kältemittelaustrittsrohr gelangt.

Vorteilhaft ist es ferner, wenn mit dem Kältemittelaustrittsrohr direkt ein Trockner verbunden wird, der unterhalb des Kondensators - wie an sich bekannt - angeordnet ist. Dadurch ergibt sich eine direkte Kältemittelverbindung zwischen Sammelrohr und Trockner und eine sichere Verlötung des Anschlussrohres im Bodenteil.

Obwohl die Erfindung von einem zweiteiligen Sammelrohr ausgeht, weil dies einfacher herstellbar ist, kann die Erfindung auch bei einem einteiligen Sammelrohr, d. h. mit einem geschlossenen einteiligen Querschnitt, z. B. einem geschweißten Rohr angewandt werden.

Nach einer vorteilhaften Parallellösung der Erfindung ist der Kältemittelanschluss an der Stirnseite eines Sammelrohres angeordnet, wobei ein Kaltemittelaustrittsrohr in eine stirnseitige Abschlusswand eingesetzt wird. Auch dieser Kältemittelanschluss benötigt keinen zusätzlichen Bauraum in der Breite des Kondensators. Besonders vorteilhaft ist eine weitere Ausgestaltung, bei welcher das Kälteaustrittsrohr endseitig aufgeweitet und direkt in das Sammelrohr gesteckt ist - dadurch entfällt die Abschlusswand.

Ausführungsbeispiele der Erfindung und der Paralellösung sind in der Zeichnung dargestellt und werden im Folgenden näher beschrieben. Es zeigen
- Fig. 1: einen Kondensator mit Trockner und Kältemittelaustrittsrohr gemäß der Erfindung
- Fig. 2: eine Einzeiheit X aus Fig. 1,
- Fig. 3: ein stirnseitig angeschlossenes Kältemittelaustrittsrohr und
- Fig. 4a, 4b, 4c: Varianten für einen stirnseitigen Kältemittelanschluss.

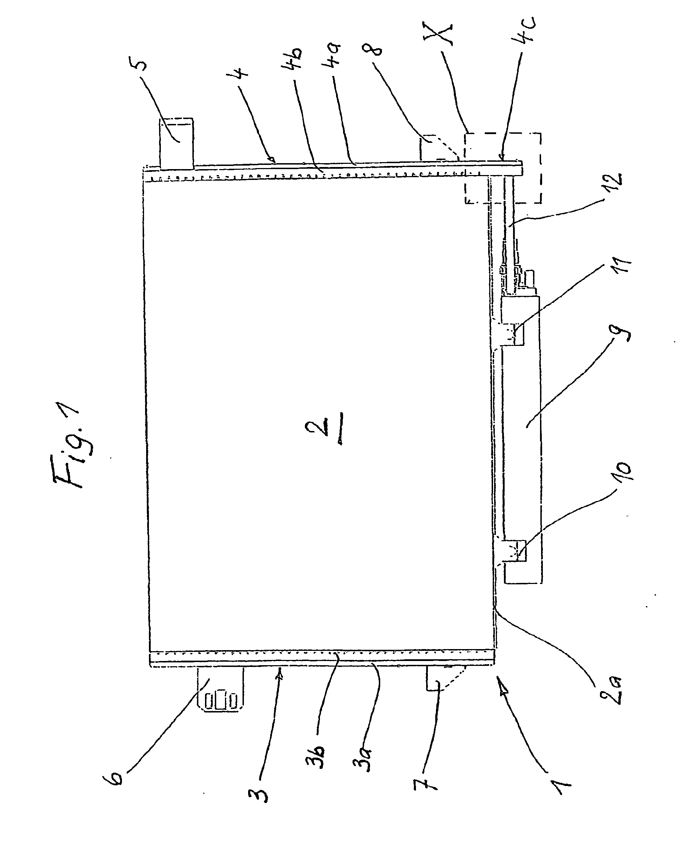

**Fig. 1** zeigt einen Kältemittelkondensator 1 für eine nicht dargestellte Kraftfahrzeug-Klimaanlage, der im Frontbereich des Kraftfahrzeuges, d. h. meistens vor dem Kühlmittelkühler eingebaut wird. Der Kondensator 1 besteht aus einem Rohr/Rippen-Block 2 (nicht näher dargestellt) sowie zwei senkrecht verlaufenden Sammelrohren 3, 4, in welche die nicht dargestellten Flachrohre des Blockes 2 münden. Beide Sammelrohre 3, 4 sind zweiteilig, d. h. sie bestehen jeweils aus einem Deckelteil 3a, 4a sowie aus einem Bodenteil 3b, 4b, welches die (nicht dargestellten) Rohrenden des Blockes 2 aufnimmt. Ein Kältemittelanschluss 5 befindet sich am oberen Teil des Sammelrohres 4; dieser Kältemittelanschluss 5 enthält in bekannter und nicht dargestellter Weise den Kältemitteleintritt, der im Deckelteil 4a angeordnet ist. Der Kondensator 1 weist ferner drei Befestigungslaschen 6, 7, 8 auf, mit denen er am nicht dargestellten Fahrzeug oder Kühlmittelkühler befestigt wird. Unterhalb des Blockes 2 ist ein Trockner 9 angeordnet, der mit dem Kondensator 1 durch Befestigungselemente 10, 11 verbunden ist. Das Sammelrohr 4 ist nach unten um ein Rohrstück 4c, einen so genannten Überstand verlängert, d. h. das Sammelrohr 4 ist länger als das Sammelrohr 3 und ragt über die Unterkante 2a des Rohr/Rippen-Blockes 2 hinaus. Zwischen dem Bereich 4c des Sammelrohres 4 und dem Trockner 9 ist ein Kältemittelaustrittsrohr angeordnet, welches eine Strömungsverbindung zwischen dem Sammelrohr 4 und dem Trockner 9 herstellt. Das Kältemittelaustrittsrohr 12 und seine Verbindung mit dem Sammelrohr 4 werden im Folgenden näher beschrieben.

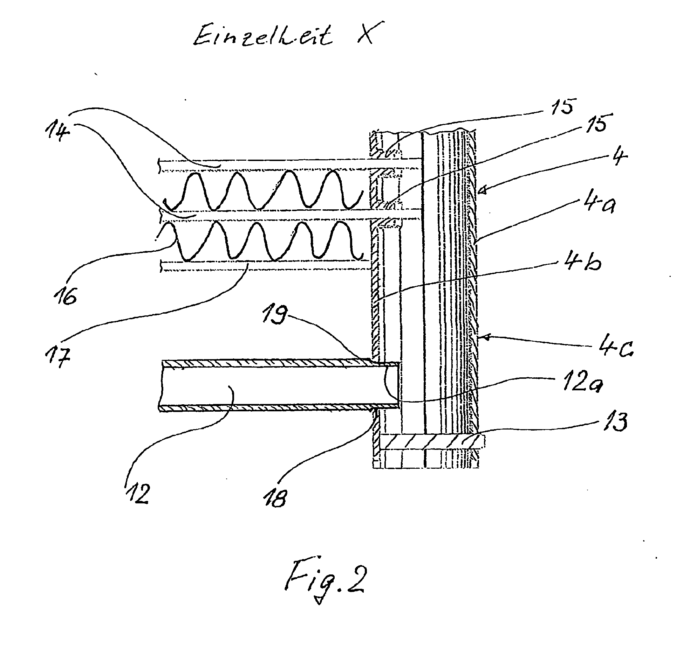

**Fig. 2** zeigt eine Einzelheit X aus Fig. 1, d. h, die Verbindung des Kältemittelaustrittsrohres 12 mit dem Sammelrohr 4, welches - wie oben erwähnt - aus dem Bodenteil 4b und dem Deckelteil 4a zusammengesetzt ist. Das verlängerte Ende 4c des Sammelrohres 4 ist stirnseitig durch eine Abschlusswand 13 fluiddicht abgeschlossen. Von dem Rohr/Rippen-Block 2 sind hier zwei Flachrohre 14 dargestellt, die in Durchzügen 15 des Bodenteiles 4b fluiddicht aufgenommen sind. Zwischen den Flachrohren 14 sind Wellrippen 16 angeordnet, wobei die äußerste Wellrippe 16 durch ein Seitenteil 17 abgedeckt wird, welches endseitig mit dem Sammelrohr 4 bzw. seinem Bodenteil 4b verbunden sein kann. Im Bodenteil 4b des Endstückes 4c ist eine Öffnung bzw. Bohrung 18 angeordnet, in welche ein Rohrende 12a des Kältemittelaustrittsrohres 12 eingesetzt ist. Das Rohr 12 ist über einen Bund 19, der am Bodenteil 4b anliegt, gegenüber dem Rohrende 12a abgesetzt. Alle zuvor erwähnten Teile bestehen aus einer Aluminiumlegierung und werden - in einem Arbeitsgang bzw. "in einem Schuss" gelötet.

Der Kondensator 1, der Teil eines nicht dargestellten Kältemittelkreislaufes einer Kraftfahrzeug-Klimaanlage ist, wird wie folgt durchströmt: Über den Anschluss 5 tritt Kältemittel, kommend von einem nicht dargestellten Kompressor, in das Sammelrohr 4 ein und wird von dort auf eine erste nicht dargestellte Rohrgruppe verteilt. In den Sammelrohren 3, 4 sind nicht dargestellte Trennwände angeordnet, so dass der gesamte Block 2 mehrfach, d. h. in mehren Fluten durchströmt wird, bis das Kältemittel schließlich über die letzten Rohre in das unterste Ende 4c des Sammelrohres 4 gelangt. Von dort tritt das Kältemittel in das Austrittsrohr 12 ein und gelangt von dort in den Trockner 9, wo dem Kältemittel in bekannter Weise Feuchtigkeit (H2O) entzogen wird. Aus dem Trockner tritt das Kältemittel in nicht dargestellter Weise aus und gelangt von dort wieder in den Kältemittelkreislauf der Klimaanlage.

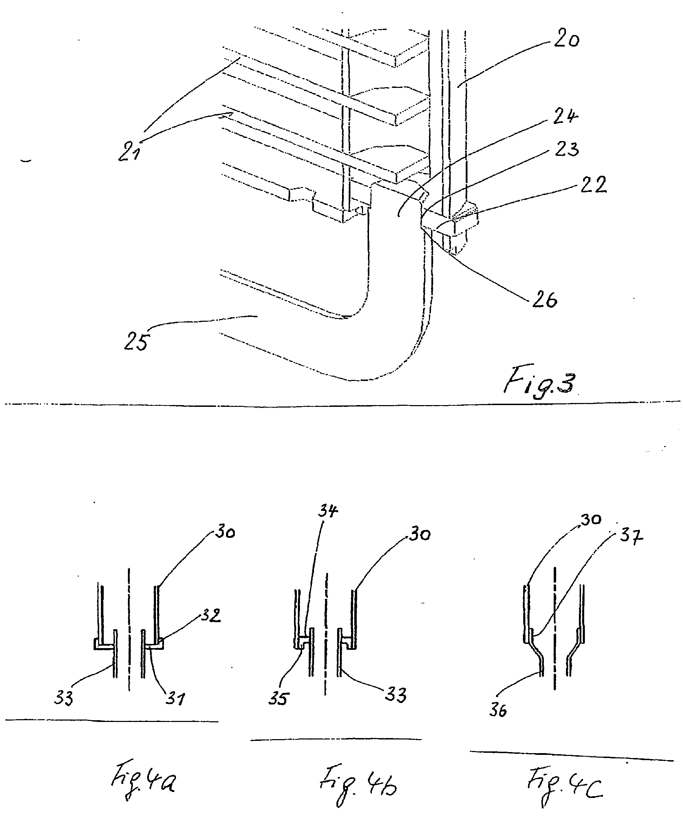

**Fig. 3** zeigt ein weiteres Ausführungsbeispiel, das nicht zur Erfindung gehört, mit einem stirnseitig angeordneten Kältemittelauslass. Von dem gesamten Kondensator ist ein Ausschnitt mit dem unteren Teil eines Sammelrohres 20 gezeigt, welches die Rohrenden von Flachrohren 21 aufnimmt und stirnseitig durch eine Abschlusswand 22 verschlossen ist. Letztere weist eine mittig angeordnete Bohrung 23 auf, in welche ein Rohrende 24 eines Kältemittelaustrittsrohres 25 gesteckt ist. Das Rohrende 24 ist gegenüber dem übrigen Rohr 25 im Querschnitt etwas verjüngt und weist daher einen Absatz 26 auf, der als Anschlag beim Einstecken des Rohrendes 24 in die Bohrung 23 wirkt. Das Rohrende 24 wird mit der Abschlusswand 22 dicht verlötet. Dies geschieht gleichzeitig mit der Verlötung des gesamten Kondensators.

Weitere Varianten für eine stirnseitige Anbindung des Kältemittelanschlussrohres zeigen die Figuren 4a, 4b und 4c, welche ebenfalls nicht zur Erfindung gehören.

**Fig. 4a** zeigt das Ende eines Sammelrohres 30, welches stirnseitig durch einen aufgesetzten Deckel 31 mit einem umlaufenden Rand 32 verschlossen ist. Der umlaufende Rand 32 legt sich von außen an den Umfang des Sammelrohres 30 an. In eine Bohrung des Deckels 31 ist ein Kältemittelaustrittsrohr 33 eingesteckt.

**Fig. 4b** zeigt das Ende des Sammelrohres 30, welches durch einen eingesetzten Deckel 34 mit einem umlaufenden Rand 35 verschlossen ist, dessen Umfangsfläche sich an die Innenwand des Sammelrohres 30 anlegt. In eine zentrale Bohrung des Deckels 34 ist das Kältemittelaustrittsrohr 33 eingesetzt.

**Fig. 4c** zeigt das Ende des Sammelrohres 30, in dessen Stirnende ein Kältemittelaustrittsrohr 36 mit einem aufgeweiteten Rohrende 37 eingesetzt ist, wobei sich ein trichterförmiger Übergang vom Sammelrohr 30 zum Kältemittelrohr 36 ergibt. In diesem Falle entfällt somit die stirnseitige Abschlusswand bzw. der Deckel für das Sammelrohr.

## Patentansprüche

1. Kondensator, insbesondere für eine Kraftfahrzeug-Klimaanlage, bestehend aus einem Rohr/Rippen-Block (2) und beiderseits angeordneten Sammelrohren (3, 4) mit einem Kältemitteleinlass (5) und einem Kältemittelauslass, wobei die Sammelrohre (3, 4) jeweils ein Deckelteil (3a, 4a) und ein Bodenteil (3b, 4b) zur Aufnahme der Rohre aufweisen, wobei der Kältemittelaustritt (18) am Bodenteil (4b) eines Sammelrohres (4) angeordnet ist, der Kältemittelaustritt als Austrittsrohr (12) ausgebildet ist, welches in eine Öffnung (18) im Bodenteil (4b) eingesetzt ist und das Sammelrohr (4) stirnseitig über den Rohr/Rippen-Block (2) hinaus verlängert ist und einen Überstand (4c) aufweist, in welchen das Austrittsrohr (12) eingesetzt ist, wobei das Austrittsrohr (12) etwa parallel zu den Rohren (11) und benachbart zum Rohr/Rippen-Block (2) verläuft und das Austrittsrohr (12) ein Rohrende (12a) mit einem Bund (19) als Anschlag aufweist, der am Bodenteil (4b) anliegt.

2. Kondensator nach Anspruch 1, **dadurch gekennzeichnet, dass** der Kondensator (1) einschließlich Austrittsrohr (12) in einem Arbeitsgang lötbar ist.

3. Kondensator nach Anspruch 2, **dadurch gekennzeichnet, dass** das Austrittsrohr (12) endseitig mit einem Trockner (9) verbunden ist, der unterhalb des Röhr/Rippen-Blockes (2) angeordnet und am Kondensator (1) befestigt ist.

## Claims

1. A condenser, in particular for a motor vehicle cooling system, comprising a tube/fin block (2) and headers (3, 4) which are arranged on both sides and have a refrigerant inlet (5) and a refrigerant outlet, wherein each header (3, 4) comprises a cover part (3a, 4a) and a bottom part (3b, 4b) for accommodating the tubes, wherein the refrigerant outlet (18) is arranged on the bottom part (4b) of a header (4), the refrigerant outlet is designed as a discharge tube (12), which is inserted in an opening (18) in the bottom part (4b), and the end face of the header (4) is extended beyond the tube/fin block (2) and has a protrusion (4c) in which the discharge tube (12) is inserted, wherein the discharge tube (12) runs approximately parallel to the tubes (11) and adjacent to the tube/fin block (2) and the discharge tube (12) has a tube end (12a) comprising a collar (19) as a stop, which is seated against the bottom part (4b).

2. The condenser according to claim 1, **characterized in that** the condenser (1), including the discharge tube (12), can be soldered in open operation.

3. A condenser according to claim 2, **characterized in that** the end of the discharge tube (12) is connected to a dryer (9), which is arranged below the tube/fin block (2) and attached to the condenser (1).

## Revendications

1. Condenseur, en particulier pour un système de climatisation d'un véhicule automobile, se composant d'un bloc (2) de tubes / d'ailettes et de tubes collecteurs (3, 4) disposés des deux côtés et comprenant une entrée de fluide frigorigène (5) et une sortie de fluide frigorigène, où les tubes collecteurs (3, 4) présentent à chaque fois une partie (3a, 4a) formant couvercle et une partie (3b, 4b) formant plateau et servant à loger les tubes, où l'ouverture d'évacuation de fluide frigorigène (18) est disposée sur la partie (4b) formant plateau d'un tube collecteur (4), l'ouverture d'évacuation de fluide frigorigène étant disposée comme un tube de sortie (12) qui est introduit dans une ouverture (18) placée dans la partie (4b) formant plateau, et le tube collecteur (4) s'étend en se prolongeant frontalement au-delà du bloc (2) de tubes / d'ailettes et présente une partie en saillie (4c) dans laquelle est introduit le tube de sortie (12), où le tube de sortie (12) s'étend à peu près parallèlement aux tubes (11) et en étant voisin du bloc (2) de tubes / d'ailettes, et le tube de sortie (12) présente une extrémité tubulaire (12a) comportant un épaulement (19) servant de butée qui est en appui sur la partie (4b) formant plateau.

2. Condenseur selon la revendication 1, **caractérisé en ce que** le condenseur (1), y compris le tube de sortie (12), peut être brasé en une seule opération.

3. Condenseur selon la revendication 2, **caractérisé en ce que** le tube de sortie (12) est combiné, côté extrémité, avec un sécheur (9) qui est disposé au-dessous du bloc (2) de tubes / d'ailettes et fixé sur le condenseur (1).
